# EUROPÄISCHE PATENTSCHRIFT

(11) **EP 0 332 763 B1**
(45) Veröffentlichungstag und Bekanntmachung des Hinweises auf die Patenterteilung: **01.09.1993**
(21) Anmeldenummer: 88121883.8
(22) Anmeldetag: 30.12.1988
(51) Int. Cl.: G01M 1/04

(54) **Schnellspannvorrichtung mit Mittenzentrierung zur Befestigung eines Fahrzeugrades auf der Achse einer Auswuchtmaschine**
Quick-clamping device with central centring for fixing a vehicle wheel on the axis of a balancing machine
Dispositif de fixation rapide avec centrage central pour le montage d'une roue de véhicule sur l'axe d'une machine d'équilibrage

(30) Priorität: 16.03.1988 DE 3808755
(43) Veröffentlichungstag der Anmeldung: 20.09.1989
(73) Patentinhaber: Warkotsch, Horst, D-30938 Burgwedel (DE)
(72) Erfinder: Warkotsch, Horst, D-30938 Burgwedel (DE)
(74) Vertreter: Leine, Sigurd, Dipl.-Ing.

(56) Entgegenhaltungen:
- EP-A- 0 056 544
- DE-A- 859 845
- DE-U- 7 129 405
- US-A- 4 118 989

## Beschreibung

Die Erfindung betrifft eine Schnellspannvorrichtung gemäß dem Oberbegriff des Anspruchs 1 mit Mittenzentrierung zur Befestigung eines Fahrzeugrades auf der Achse einer Auswuchtmaschine.

Durch die Firmendruckschrift "Universal-Schnellspannvorrichtung für Mittenzentrierung" der Firma Gebr. Hofmann GmbH & Co. KG in D-6102 Pfungstadt, Druckdatum 09-77, Bestell-Nr. 335/68 für die Vorrichtung, ist eine Schnellspannvorrichtung der betreffenden Art bekannt. Dabei besteht die Konusanordnung ganz einfach aus einem Konus, der mit seinem sich verjüngenden Teil der zu zentrierenden Felge zugewandt ist und sich auf seiner Rückseite an einer Feder abstützt, die sich am Boden eines topfartigen Teiles des Flansches abstützt. Die Spannmittel bestehen aus einer Spannschraube, die auf ein Gewinde am Ende der Achse der Auswuchtmaschine aufschraubbar ist und einen Drucktopf aufweist, der den Konus übergreift und dessen Rand zum Festziehen der Felge an dem Flansch dient. Für verschiedene Felgen mit zentralen Zentrierlöchern unterschiedlichen Durchmessers sind mehrere Konusse mit unterschiedlichen Durchmessern vorgesehen.

Beim Aufspannen eines Fahrzeugrades kommt zunächst das zentrale Zentrierloch auf der Konusfläche des Konusses zur Auflage, und beim weiteren Festziehen der Spannschraube wandert der Konus auf der Achse mit der Felge mit, wobei die Feder den Konus fest in das Zentrierloch drückt und so die Zentrierung bewirkt. Zum Schluß des Festspannens drückt die Spannschraube mit ihrem Drucktopf die Felge fest gegen den Flansch.

Diese bekannte Schnellspannvorrichtung hat den Nachteil, daß die konische Zentrierfläche des Zentrierkonusses nicht an die eigentliche, zylindrische Zentrierfläche des Zentrierloches der Felge zur Anlage kommt, sondern lediglich an deren Rand, wodurch die Zentriergenauigkeit verringert wird. Außerdem wird die Zentriergenauigkeit durch das unvermeidliche Spiel zwischen Zentrierkonus und Achse der Auswuchtmaschine beeinträchtigt. Aus einen anderen technischen Gebiet, nämlich der Zentrierung eines Drahtes im Loch eines Werkzeughalters, ist die Vorrichtung von DE 859 845 bekannt, die auf eine ähnliche Wiese die erwähnte Instabilität vermeidet.

Es war auch bekannt, für die Mittenzentrierung zylindrische Zentrierringe zu verwenden, die mit sehr engen Passungstoleranzen geschliffen sind. Bei Verwendung derartiger Zentrierringe wird zwar eine Anlage der Zentrierfläche an der zu zentrierenden Innenfläche des Zentrierloches der Felge erreicht, jedoch addieren sich drei Toleranzen, nämlich die Außen- und Innentoleranz der Zentrierringe sowie die Toleranz der Achse der Auswuchtmaschine. Diese Toleranzen können sich zu einer großen Gesamttoleranz addieren, so daß sich im Auswuchtergebnis nichtzufriedenstellende Umschlagfehler ergaben.

Der Erfindung liegt die Aufgabe zugrunde, eine Schnellspannvorrichtung der betreffenden Art mit Mittenzentrierung zu schaffen, bei der die Zentrierung an der zylindrischen Innenfläche des Zentrierloches des auszuwuchtenden Rades erfolgt und die Zentriertoleranzen wesentlich verbessert sind.

Die der Erfindung zugrundeliegende Aufgabe wird durch die im Kennzeichen des Anspruchs 1 angegebene Lehre gelöst.

Der Grundgedanke der Erfindung besteht darin, die Konusanordnung nach Art einer Spannzange auszubilden, deren Wirkung jedoch nicht in der bekannten Weise zum Spannen zu benutzen, sondern nur zum Zentrieren, während das Festspannen in der bei Schnellspannvorrichtungen für Auswuchtmaschinen bekannten Weise mittels eines Flansches erfolgt, gegen den die Felge gedrückt wird. Bekannte Spannzangen werden nicht mit Federn festgezogen. Erfindungsgemäß ist dies der Fall, um so die Zentrierkräfte zu begrenzen und insbesondere die Möglichkeit zu schaffen, daß das Zentrieren mittels der Spannzange und die Befestigung des Fahrzeugrades gemeinsam mittels der Spannmittel, in der Regel einer Spannschraube, erfolgen kann, weil der Spannpunkt der Spannzange nicht mit dem Befestigungspunkt des Fahrzeugrades in Achsrichtung wegen der aufzufangenden Zentriertoleranzen übereinstimmt.

Die Zentrierung mit der Spannzange erfolgt praktisch toleranzfrei, da im Zentrierzustand kein Spiel mehr vorhanden ist und die beiden Teile der Spannzange sich ohne Schwierigkeiten mit hoher Rotationsgenauigkeit fertigen lassen und es auf ihre radialen Toleranzen überhaupt nicht ankommt.

Sollen Fahrzeugräder mit zentralen Zentrierlöchern unterschiedlichen Durchmessers zentriert werden, so ist es lediglich erforderlich, die Spannzangenanordnung gegen eine andere mit entsprechend anderem zylindrischen Außendurchmesser auszutauschen.

Zur Betätigung der Spannzange muß auf diese eine Kraft ausgeübt werden, was durch die Feder erfolgt, wobei Feder und das andere Teil der Spannzange sich an Widerlagern abstützen müssen. Hierzu gibt es mehrere Möglichkeiten. Eine Möglichkeit besteht in der Lehre des Anspruchs 2, wonach das Widerlager die Felge des Fahrzeugrades ist und die Feder sich mit ihrem der Spannzange abgewandten Ende an einem achsfesten Teil, insbesondere dem Flansch, abstützt.

Eine andere Möglichkeit besteht in der Lehre des Anspruchs 3, wonach das Widerlager ein achsfestes Teil, insbesondere der Flansch ist und die Feder sich mit ihrem der Spannzange abgewandten Ende an den Spannmitteln abstützt.

Die Anlagefläche zur Anlage an der Felge des Fahrzeugrades befindet sich zweckmäßigerweise an einem radialen Flansch an der zylindrischen Außenfläche des äußeren Teils der Spannzange. Dadurch tritt die Zentrierwirkung erst dann ein, wenn sich die Felge mit ihrem Zentrierloch sicher auf der zylindrischen Außenfläche des äußeren Teils der Spannzange befindet.

Anhand der Zeichnung soll die Erfindung an Ausführungsbeispielen näher erläutert werden.
- Fig. 1: zeigt ein erstes Ausführungsbeispiel der erfindungsgemäßen Schnellspannvorrichtung und
- Fig. 2: zeigt ein zweites Ausführungsbeispiel ähnlich gemäß Fig. 1.

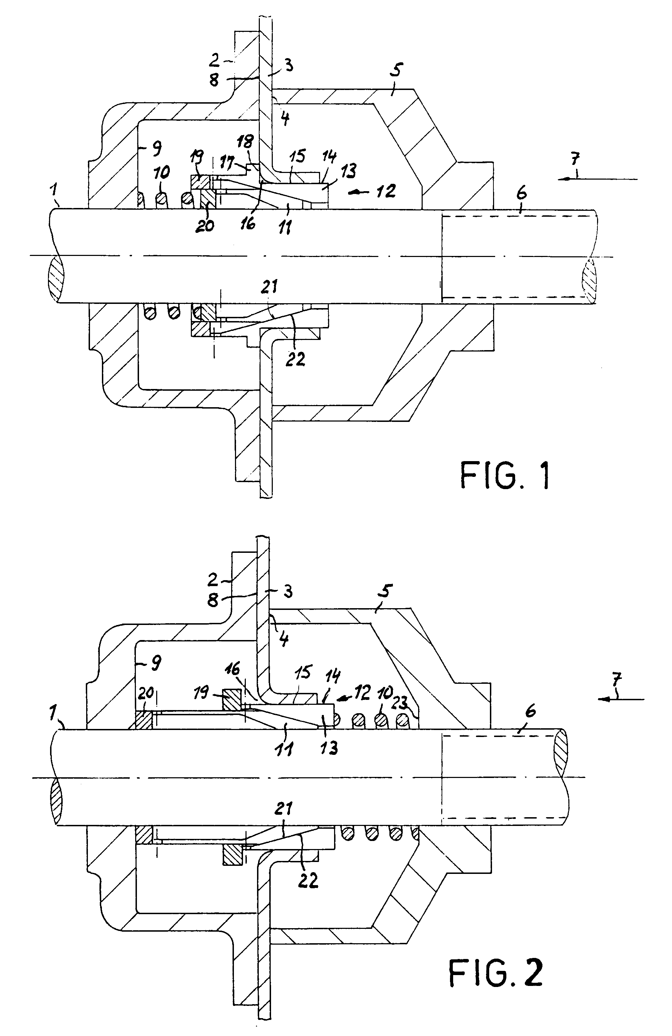

Fig. 1 zeigt eine Achse 1 einer nicht dargestellten Auswuchtmaschine. Auf der Achse sitzt fest ein topfartiger Flansch 2, gegen den eine nur teilweise dargestellte Felge 3 eines ebenfalls nicht dargestellten Fahrzeugrades durch einen Rand 4 eines Drucktopfes 5 gedrückt wird, der mittels einer nicht dargestellten, auf ein Außengewinde 6 der Achse 1 aufgeschraubten Spannschraube in Richtung eines Pfeiles 7 gedrückt wird. Die Felge 3 liegt so reibschlüssig verbunden und fest an einer Anlagefläche 8 des Flansches 2 an.

An einem Boden 9 des topfförmigen Flansches 2 stützt sich eine Feder 10 ab, die an einem inneren Teil 11 einer Spannzange 12 anliegt, deren äußeres Teil 13 mit einer zylindrischen Außenfläche 14 an einer zylindrischen Innenfläche 15 eines Zentrierloches 16 der Felge 3 anliegt.

Von der zylindrischen Außenfläche 14 aus erstreckt sich ein radialer Flansch 17 nach außen, der mit einer axialen Anlagefläche 18 an der Felge 3 anliegt und somit die Reaktionskraft für die Feder 10 liefert.

Die Teile 11 und 13 der Spannzange 12 weisen ringförmige Teile 19 und 20 auf, von denen aus sich in der Zeichnung nach rechts jeweils geschlitzte Teile erstrecken, wobei das innere Teil 11 eine konische Außenfläche 21 und das Teil 13 eine konische Innenfläche 22 aufweist, so daß bei deren Aufgleiten sich der geschlitzte Teil des inneren Teiles 11 der Spannzange 12 spielfrei auf die Achse 1 auflegt, während die zylindrische Außenfläche 14 des Teiles 13 spielfrei an der Innenfläche 15 des Loches 16 der Felge 3 zur Anlage kommt. Da zwischen den konischen Flächen 21 und 22 dabei kein Spiel vorhanden ist, ist insgesamt überhaupt kein Spiel mehr im zentrierten Zustand vorhanden.

Beim Festspannen der Felge 3 auf der Achse 1 wird zunächst die Felge 3 mit dem Zentrierloch 16 auf die zylindrischen Außenfläche 14 aufgeschoben, deren Durchmesser in diesem Zustand noch etwas kleiner ist als der Durchmesser der Innenfläche 15. Danach wird die Felge 3 in Richtung des Pfeiles 7 bewegt, so daß zunächst die Felge 3 an der Anlagefläche 18 zur Anlage kommt und dadurch das Teil 13 der Spannzange 12 in Richtung des Pfeiles 7 mitgenommen wird, wobei die Feder 10 gespannt wird und die konische Innenfläche 22 auf die konische Außenfläche 21 aufgleitet und so die Spannzange erweitert wird und die Zentrierung erfolgt. Die Bewegung der Felge 3 erfolgt dabei zum Schluß durch den Drucktopf 5 in Verbindung mit der nicht dargestellten Spannschraube, bis schließlich der Rand 4 des Drucktopfes 5 die Felge 3 fest gegen die Fläche 8 des Flansches 2 drückt.

Fig. 2 zeigt eine Abwandlung der Ausführungsform gemäß Fig. 1. Gleiche oder sich entsprechende Teile sind mit gleichen Bezugsziffern versehen. Der Unterschied besteht darin, daß sich das innere Teil 11 der Spannzange mit seinem U-förmigen Teil 20 am Boden 9 des Flansches 2 abstützt, während die Feder 10 sich am Boden 23 des Drucktopfes 5 abstützt. Bei dieser Ausführungsform fehlt der Flansch 17, so daß das innere Teil 11 der Spannzange 12 während der Zentrierbewegung keine axiale Bewegung ausführt.

## Patentansprüche

1. Schnellspannvorrichtung mit Mittenzentrierung zur Befestigung eines Fahrzeugrades auf der Achse einer Auswuchtmaschine, mit einem auf der Achse fest angeordneten Flansch zur reibschlüssigen Anlage der Felge des Fahrzeugrades, mit Spannmitteln zum Festziehen der Felge gegen den Flansch, mit einer Konusanordnung zum Eingriff in das zentrale Zentrierloch der Felge, und mit einer Feder, die die Konusanordnung in Richtung auf das Zentrierloch vorspannt, **dadurch gekennzeichnet,** daß die Konusanordnung nach Art einer Spannzange (12) mit einem inneren Teil (11) und einem äußeren Teil (13) ausgebildet ist, deren äußeres Teil (13) radial spreizbar ist und eine zylindrische Außenfläche (14) zum Eingriff in die Zentrierbohrung (16) des Fahrzeugrades aufweist, wobei eines der beiden Teile (11, 13) eine Anlagefläche zur axialen Anlage an der Feder (10) und das andere eine Anlagefläche zur axialen Anlage an einem Widerlager aufweist.

2. Schnellspannvorrichtung nach Anspruch 1, **dadurch gekennzeichnet,** daß sich die Anlagefläche (18) zur axialen Anlage an einem Widerlager an dem äußeren Teil (13) befindet und das Widerlager die Felge (3) des Fahrzeugrades ist und daß die Feder (10) sich mit ihrem einen Ende an dem inneren Teil (11) und mit ihrem anderen Ende an einem achsfesten Teil, insbesondere dem Flansch (2), abstützt.

3. Schnellspannvorrichtung nach Anspruch 1, **dadurch gekennzeichnet,** daß das Widerlager ein achsfestes Teil, insbesondere der Flansch (2), ist und die Feder (10) sich mit ihrem der Spannzange abgewandten Ende an den Spannmitteln (5, 23) abstützt.

4. Schnellspannvorrichtung nach Anspruch 2, **dadurch gekennzeichnet,** daß die Anlagefläche (18) zur Anlage an der Felge (3) des Fahrzeugrades an einem radialen Flansch (17) an der zylindrischen Außenfläche (14) des äußeren teils (13) der Spannzange (12) gebildet ist.

## Claims

1. A quick-clamping device with central centring for fixing a vehicle wheel on the axis of a balancing machine, having a flange securely disposed on the axis for the frictional abutment of the rim of the vehicle wheel, having clamping means for tightening the rim against the flange, having a conical arrangement for engagement in the central centring hole of the rim, and having a spring, which prestresses the conical arrangement towards the centring hole,
**characterised in that** the conical arrangement is constructed like a collet chuck (12) having an inner part (11) and an outer part (13), the outer part (13) of which is radially expandable and has a cylindrical outer surface for engagement in the centring hole (16) of the vehicle wheel, whereby one of the two parts (11, 13) comprises a bearing surface for axial abutment against the spring (10) and the other comprises a bearing surface for axially abutting an abutment.

2. A quick-clamping device according to Claim 1,
**characterised in that** the bearing surface (18) for axially abutting an abutment is located at the outer part (13) and the abutment is the rim (3) of the vehicle wheel,
**and in that** the spring (10) is supported with one end at the inner part (11) and with its other end at an axially-fixed part, in particular the flange (2).

3. A quick-clamping device according to Claim 1,
**characterised in that** the abutment is an axially-fixed part, in particular the flange (2), and the spring (10) is supported on the clamping means (5, 23) with its end remote from the collet chuck.

4. A quick-clamping device according to Claim 2,
**characterised in that** the bearing surface (18) for abutting the rim (3) of the vehicle wheel is formed on a radial flange (17) on the cylindrical outer surface (14) of the outer part (13) of the collet chuck (12).

## Revendications

1. Dispositif de serrage rapide avec centrage central pour la fixation d'une roue de véhicule sur l'axe d'une machine d'équilibrage dynamique, avec un flasque monté fixe sur l'axe pour l'appui à entraînement par friction de la jante de la roue de véhicule, avec des moyens de serrage pour le blocage de la jante contre le flasque, avec un ensemble à cône pour la prise dans le trou central de centrage de la jante et avec un ressort qui précontraint l'ensemble à cône en direction du trou de centrage,
caractérisé en ce que l'ensemble à cône est réalisé sous forme d'une pince de serrage (12) avec une partie intérieure (11) et une partie extérieure (13), dont la partie extérieure (13) peut être écartée radialement et présente une surface extérieure cylindrique (14) pour la prise dans l'alésage de centrage (16) de la roue de véhicule, l'une des deux parties (11, 13) présentant une surface d'appui pour l'appui axial sur le ressort (10) et l'autre une surface d'appui pour l'appui axial sur une butée.

2. Dispositif de serrage rapide selon la revendication 1,
caractérisé en ce que la surface d'appui (18) pour l'appui axial sur une butée se trouve sur la partie extérieure (13) et la butée est la jante (3) de la roue de véhicule et que le ressort (10) s'appuie par une de ses extrémités sur la partie intérieure (11) et par son autre extrémité sur une pièce fixe axialement, en particulier le flasque (2).

3. Dispositif de serrage rapide selon la revendication 1,
caractérisé en ce que la butée est une pièce fixe axialement, en particulier la jante (2), et le ressort (10) s'appuie par son extrémité écartée de la pince de serrage sur les moyens de serrage (5, 23).

4. Dispositif de serrage rapide selon la revendication 2,
caractérisé en ce que la surface d'appui (18) pour l'appui sur la jante (3) de la roue de véhicule est formée sur un flasque radial (17) sur la surface cylindrique extérieure (14) de la partie extérieure (13) de la pince de serrage (12).
